# EUROPEAN PATENT APPLICATION

(11) **EP 4 307 749 A1**
(43) Date of publication of application: **17.01.2024**
(21) Application number: 21930217.1
(22) Date of filing: 12.03.2021
(51) Int. Cl.: H04W 16/28, H04W 76/19, H04W 88/02

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2021/010106
(87) International publication number: WO 2022/190365

(57) **Abstract**

A terminal according to one aspect of the present disclosure includes a receiving section that receives at least one of configuration information about beam failure recovery and configuration information about a reference signal for beam failure detection, each piece of the configuration information being for a cell included in a cell group, and a control section that judges, on the basis of at least one of the configuration information about the beam failure recovery and the configuration information about the reference signal for the beam failure detection, the number of control channel resources corresponding to a scheduling request (SR) for beam failure recovery configured for the cell group or a specific cell in the cell group.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

In existing LTE systems (LTE Rel. 8 to Rel. 15), radio link quality monitoring (radio link monitoring (RLM)) is performed. When Radio link failure (RLF) is detected by performing the RLM, a user terminal (User Equipment (UE)) is requested to re-establish an RRC (Radio Resource Control) connection.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For NR (for example, Rel. 15/16), implementation of procedure for switching to another beam in response to detection of beam failure (which may be referred to as beam failure recovery (BFR) procedure, BFR, link recovery procedure, or the like) is under study.

In future radio communication systems (for example, Rel. 17 (or later versions) or 5G (or later versions)), it is also assumed that a terminal (UE) performs communication by using a plurality of transmission/reception points (TRPs)/UE panels. In this case, it is conceivable that beam management (for example, beam failure detection) is performed in the plurality of TRPs/plurality of UE panels.

However, how to control beam failure detection (BFD) or beam failure recovery (BFR) in each TRP/UE panel becomes an issue. Unless the beam failure detection or beam failure recovery in each TRP/UE panel can be controlled appropriately, communication throughput reduction or communication quality degradation may occur.

The present disclosure has been made in view of such points, and an object of the present disclosure is to provide a terminal, a radio communication method, and a base station that can appropriately perform beam failure detection or beam failure recovery even when a plurality of transmission/reception points are used.

### Solution to Problem

A terminal according to one aspect of the present disclosure includes a receiving section that receives at least one of configuration information about beam failure recovery and configuration information about a reference signal for beam failure detection, each piece of the configuration information being for a cell included in a cell group, and a control section that judges, on the basis of at least one of the configuration information about the beam failure recovery and the configuration information about the reference signal for the beam failure detection, the number of control channel resources corresponding to a scheduling request (SR) for beam failure recovery configured for the cell group or a specific cell in the cell group.

### Advantageous Effects of Invention

According to one aspect of the present disclosure, it is possible to appropriately perform beam failure detection or beam failure recovery even when a plurality of transmission/reception points are used.

### Brief Description of Drawings

[FIG. 1] FIG. 1 is a diagram to show an example of beam recovery procedure in Rel-15 NR.
[FIG. 2] FIG. 2 is a diagram to show an example of beam recovery procedure in Rel-16 NR.
[FIG. 3] FIGS. 3A to 3C are each a diagram to show an example of configuration of a PUCCH resource for a scheduling request and configuration of a spatial relation.
[FIG. 4] FIGS. 4A to 4C are diagrams to show examples of challenges of BFR procedure in a case where beam failure is detected in different TRPs between cells and in a case where different TRPs are configured between cells.
[FIG. 5] FIGS. 5A and 5B are each a diagram to show an example of an SR PUCCH resource configuration method according to a first aspect.
[FIG. 6] FIG. 6 is a diagram to show another example of the SR PUCCH resource configuration method according to the first aspect.
[FIG. 7] FIG. 7 is a diagram for explaining an example of BFR procedure according to a second aspect.
[FIG. 8] FIGS. 8A to 8C are each a diagram for explaining another example of the BFR procedure according to the second aspect.
[FIG. 9] FIG. 9 is a diagram for explaining another example of the BFR procedure according to the second aspect.
[FIG. 10] FIGS. 10A to 10C are each a diagram for explaining another example of the BFR procedure according to the second aspect.
[FIG. 11] FIGS. 11A to 11C are each a diagram for explaining an example of BFR procedure according to a fifth aspect.
[FIG. 12] FIG. 12 is a diagram to show an example of a schematic structure of a radio communication system according to one embodiment.
[FIG. 13] FIG. 13 is a diagram to show an example of a structure of a base station according to one embodiment.
[FIG. 14] FIG. 14 is a diagram to show an example of a structure of a user terminal according to one embodiment.
[FIG. 15] FIG. 15 is a diagram to show an example of a hardware structure of the base station and the user terminal according to one embodiment.

### Description of Embodiments

### (Beam Failure Detection)

In NR, communication is performed by using beam forming. For example, a UE and a base station (for example, gNB (gNodeB)) may use a beam used for signal transmission (also referred to as a transmit beam, Tx beam, or the like) and a beam used for signal reception (also referred to as a receive beam, Rx beam, or the like).

Using the beam forming is susceptible to interference from an obstruction, and thus it is assumed that radio link quality deteriorates. Due to deterioration of the radio link quality, radio link failure (RLF) may occur frequently. Occurrence of the RLF requires reconnection of a cell, and thus frequent occurrence of the RLF causes deterioration of system throughput.

In NR, in order to suppress occurrence of the RLF, when quality of a specific beam deteriorates, procedure for switching to another beam (which may be referred to as beam recovery (BR), beam failure recovery (BFR), L1/L2 (Layer 1/Layer 2) beam recovery, or the like) is performed. Note that the BFR procedure may be simply referred to as BFR.

Note that beam failure (BF) in the present disclosure may be referred to as link failure.

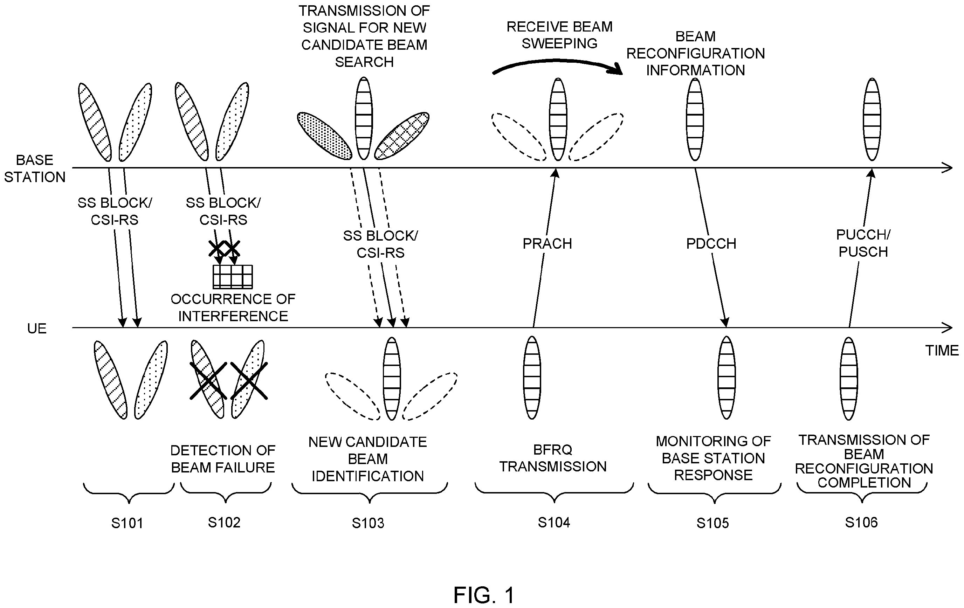

FIG. 1 is a diagram to show an example of the beam recovery procedure in Rel-15 NR. The number of beams and the like are just examples, and are not limited to this. In an initial state (step S101) of FIG. 1, the UE performs measurement based on a reference signal (RS) resource transmitted by using two beams.

The RS may be at least one of a synchronization signal block (SSB) and an RS for channel state measurement (Channel State Information RS (CSI-RS)). Note that the SSB may be referred to as an SS/PBCH (Physical Broadcast Channel) block or the like.

The RS may be at least one of a primary synchronization signal (Primary SS (PSS)), a secondary synchronization signal (Secondary SS (SSS)), a mobility reference signal (Mobility RS (MRS)), a signal included in the SSB, the SSB, the CSI-RS, a demodulation reference signal (DMRS), a beam-specific signal, and the like, or may be a signal constituted by expanding, changing, or the like these signals. The RS measured at step S101 may be referred to as an RS for beam failure detection (Beam Failure Detection RS (BFD-RS)), an RS used for beam recovery procedure (BFR-RS), or the like.

At step S102, due to interference of a radio wave from the base station, the UE fails to detect the BFD-RS (or quality of reception of the RS deteriorates). Such interference may occur due to, for example, influence of an obstruction, fading, interference, and the like between the UE and the base station.

The UE detects beam failure when a certain condition is satisfied. For example, the UE may detect occurrence of the beam failure when a BLER (Block Error Rate) for all of configured BFD-RSs (BFD-RS resource configurations) is less than a threshold value. When occurrence of the beam failure is detected, a lower layer (physical (PHY) layer) of the UE may notify (indicate) a beam failure instance for a higher layer (MAC layer).

Note that judgment standards (criteria) are not limited to the BLER, and may be reference signal received power in the physical layer (Layer 1 Reference Signal Received Power (L1-RSRP)). In place of the RS measurement or in addition to the RS measurement, beam failure detection may be performed on the basis of a downlink control channel (Physical Downlink Control Channel (PDCCH)) or the like. The BFD-RS may be expected to be quasi-co-location (QCL) with a DMRS for a PDCCH monitored by the UE.

Here, QCL is an indicator indicating statistical properties of the channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

Information related to the BFD-RS (for example, indices, resources, numbers, the number of ports, precoding, and the like for the RS), information related to the beam failure detection (BFD) (for example, the above-mentioned threshold value), and the like may be configured (notified) for the UE by using higher layer signaling or the like. The information related to the BFD-RS may be referred to as information related to resources for BFR or the like.

In the present disclosure, the higher layer signaling may be, for example, any one or combinations of RRC (Radio Resource Control) signaling, MAC (Medium Access Control) signaling, broadcast information, and the like.

For example, the MAC signaling may use media access control control elements (MAC CEs (Control Elements)), MAC PDUs (Protocol Data Units), and the like. The broadcast information may be, for example, a master information block (MIB), a system information block (SIB), minimum system information (Remaining Minimum System Information (RMSI)), other system information (OSI), or the like.

The higher layer (for example, the MAC layer) of the UE may start a certain timer (which may be referred to as a beam failure detection timer) when receiving beam failure instance notification from the PHY layer of the UE. The MAC layer of the UE may trigger BFR (for example, start any one of random access procedures mentioned below) when receiving the beam failure instance notification certain times (for example, beamFailureInstanceMaxCount configured by RRC) or more until the timer expires.

When there is no notification from the UE or when receiving a certain signal (beam recovery request at step S104) from the UE, the base station may judge that the UE has detected beam failure.

At step S103, for beam recovery, the UE starts a search for a new candidate beam for use in new communication. The UE may select, by measuring a certain RS, the new candidate beam corresponding to the RS. The RS measured at step S103 may be referred to as a new candidate RS, an RS for new candidate beam identification (New Candidate Beam Identification RS (NCBI-RS)), a CBI-RS, a CB-RS (Candidate Beam RS), or the like. The NCBI-RS may be the same as the BFD-RS, or may be different from the BFD-RS. Note that the new candidate beam may be simply referred to as a candidate beam or a candidate RS.

The UE may determine a beam corresponding to an RS satisfying a certain condition as the new candidate beam. For example, the UE may determine the new candidate beam on the basis of an RS with L1-RSRP exceeding a threshold value, out of configured NCBI-RSs. Note that judgment standards (criteria) are not limited to the L1-RSRP. The L1-RSRP related to an SSB may be referred to as SS-RSRP. The L1-RSRP related to a CSI-RS may be referred to as CSI-RSRP.

Information related to the NCBI-RS (for example, resources, numbers, the number of ports, precoding, and the like for the RS), information related to new candidate beam identification (NCBI) (for example, the above-mentioned threshold value), and the like may be configured (notified) for the UE by using higher layer signaling or the like. Information related to the new candidate RS (or the NCBI-RS) may be obtained on the basis of information related to the BFD-RS. The information related to the NCBI RS may be referred to as information related to resources for NBCI or the like.

Note that the BFD-RS, the NCBI-RS, and the like may be interpreted as a radio link monitoring reference signal (Radio Link Monitoring RS (RLM-RS)).

At step S104, the UE that has identified the new candidate beam transmits a beam recovery request (Beam Failure Recovery reQuest (BFRQ)). The beam recovery request may be referred to as a beam recovery request signal, a beam failure recovery request signal, or the like.

The BFRQ may be transmitted by using, for example, at least one of an uplink control channel (Physical Uplink Control Channel (PUCCH)), a random access channel (Physical Random Access Channel (PRACH)), an uplink shared channel (Physical Uplink Shared Channel (PUSCH)), and a configured grant (CG) PUSCH.

The BFRQ may include information about the new candidate beam/new candidate RS identified at step S103. A resource for the BFRQ may be associated with the new candidate beam. The information about the beam may be notified by using a beam index (BI), a port index of a certain reference signal, an RS index, a resource index (for example, a CSI-RS resource indicator (CRI)), an SSB resource indicator (SSBRI), or the like.

For Rel-15 NR, CB-BFR (Contention-Based BFR) that is BFR based on contention-based random access (RA) procedure and CF-BFR (Contention-Free BFR) that is BFR based on non-contention-based random access procedure are under study. In the CB-BFR and the CF-BFR, the UE may transmit a preamble (also referred to as an RA preamble, a random access channel (Physical Random Access Channel (PRACH)), a RACH preamble, or the like) as the BFRQ by using a PRACH resource.

In the CB-BFR, the UE may transmit a preamble randomly selected from one or a plurality of preambles. On the other hand, in the CF-BFR, the UE may transmit a preamble allocated from the base station in a UE-specific manner. In the CB-BFR, the base station may allocate an identical preamble to a plurality of UEs. In the CF-BFR, the base station may allocate a preamble in a UE-dedicated manner.

Note that the CB-BFR and the CF-BFR may be referred to as CB PRACH-based BFR (contention-based PRACH-based BFR (CBRA-BFR)) and CF PRACH-based BFR (contention-free PRACH-based BFR (CFRA-BFR)), respectively. The CBRA-BFR may be referred to as CBRA for BFR. The CFRA-BFR may be referred to as CFRA for BFR.

In both of the CB-BFR and the CF-BFR, information related to the PRACH resource (RA preamble) may be notified by using, for example, higher layer signaling (RRC signaling or the like). For example, the information may include information indicating correspondence between detected DL-RSs (beams) and PRACH resources, and a different PRACH resource may be associated with each DL-RS.

At step S105, the base station that has detected the BFRQ transmits a response signal (which may be referred to as gNB response or the like) in response to the BFRQ from the UE. The response signal may include reconfiguration information about one or a plurality of beams (for example, DL-RS resource configuration information).

The response signal may be transmitted in, for example, a UE-common search space of a PDCCH. The response signal may be notified by using a PDCCH (DCI) cyclic redundancy check (CRC)-scrambled by a UE identifier (for example, a cell-radio RNTI (C-RNTI)). The UE may judge, on the basis of beam reconfiguration information, at least one of a transmit beam and a receive beam to be used.

The UE may monitor the response signal on the basis of at least one of a control resource set (CORESET) for BFR and a search space set for BFR.

With respect to the CB-BFR, when the UE receives a PDCCH corresponding to a C-RNTI related to the UE itself, it may be judged that contention resolution has succeeded.

With respect to processing at step S105, a period for the UE to monitor response from the base station (for example, gNB) to the BFRQ may be configured. The period may be referred to as, for example, a gNB response window, a gNB window, a beam recovery request response window, or the like. The UE may perform retransmission of the BFRQ when there is no gNB response detected in the window period.

At step S106, the UE may transmit, to the base station, a message indicating that beam reconfiguration has been completed. For example, the message may be transmitted on a PUCCH, or may be transmitted on a PUSCH.

Beam recovery success (BR success) may represent, for example, a case where step S106 has been reached. On the other hand, beam recovery failure (BR failure) may correspond to, for example, a case that BFRQ transmission has reached a certain number of times or a case that a beam failure recovery timer (Beam-failure-recovery-Timer) has expired.

In Rel. 15, a case that beam recovery procedure (for example, BFRQ notification) for beam failure detected in an SpCell (PCell/PSCell) is performed by using random access procedure is supported.

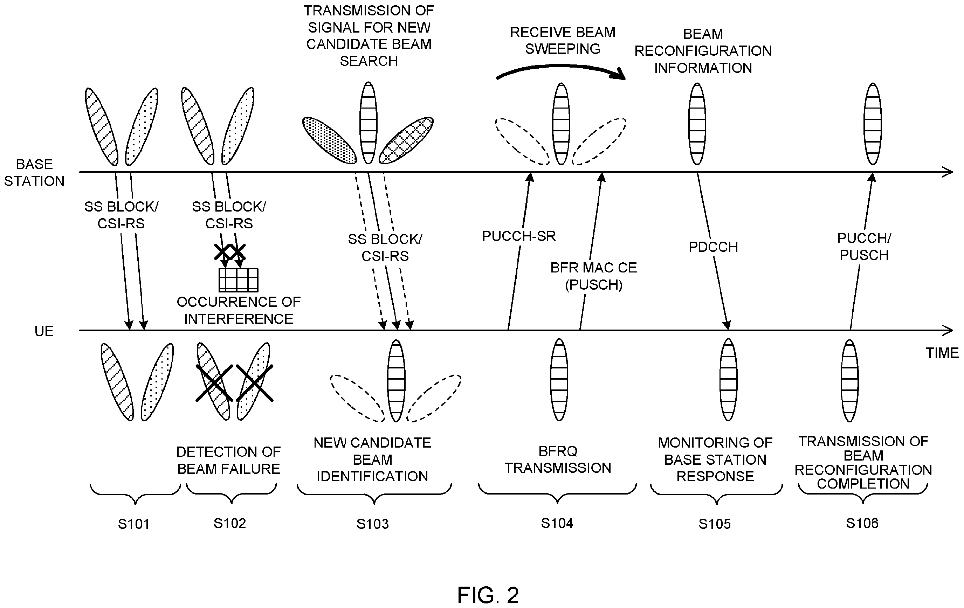

On the other hand, in Rel. 16, a case that beam recovery procedure (for example, BFRQ notification (step S104 of FIG. 1)) for beam failure detected in an SCell is performed by using at least one of PUCCH (for example, scheduling request (SR)) transmission for BFR and MAC CE (for example, UL-SCH) transmission for BFR is supported (see FIG. 2).

For example, the UE may transmit information related to beam failure by using two MAC CE-based steps (SR transmission/MAC CE transmission). The information related to the beam failure may include information related to a cell in which the beam failure has been detected and information related to a new candidate beam (or a new candidate RS index).

### [Step 1]

When BF has been detected, a PUCCH-BFR (scheduling request (SR)) may be transmitted from the UE to the SpCell (for example, the PCell/PSCell). The PUCCH-BFR may be referred to as a PUCCH-SR, a BFR PUCCH-SR, an SR PUCCH, or a BFR SR.

Subsequently, a UL grant (for example, DCI) for step 2 described below may be transmitted from the PCell/PSCell to the UE. In a case where beam failure has been detected, when a MAC CE (or a UL-SCH/PUSCH) for transmitting information related to a new candidate beam is present, step 1 (for example, SR PUCCH transmission) may be omitted to perform step 2 (for example, MAC CE transmission).

### [Step 2]

The UE may transmit, to the base station (PCell/PSCell/SCell), information (for example, a cell index) related to a (unsuccessful) cell in which the beam failure has been detected and the information related to the new candidate beam by using the MAC CE via an uplink channel (for example, a PUSCH). After that, after BFR procedure, QCL of a PDCCH/PUCCH/PDSCH/PUSCH may be updated to a new beam after a certain period (for example, 28 symbols) from reception of a response signal from the base station.

Note that these step numbers are just numbers for description, and a plurality of steps may be combined with each other, or the order of the steps may be changed. Whether to perform the BFR may be configured for the UE by using higher layer signaling.

Incidentally, for future radio communication systems (for example, Rel. 17 (or later versions) or 5G (or later versions)), enhancement of beam management by a UE including a plurality of panels (multiple panels) or beam management using a plurality of transmission/reception points (multiple Transmission/Reception Points (TRPs)) is under study.

In beam failure detection/beam failure recovery in Rel. 17 (or later versions), it is assumed that a BFRQ framework based on an SCell BFR BFRQ in Rel. 16 (for example, a BFRQ using the 2 steps) is supported. In this case, up to X PUCCH-SR resources (for example, dedicated PUCCH-SR resources) may be configured in a cell group. X may be 1, may be 2, or may be 2 or more.

In the present disclosure, the cell group may be, for example, at least one of a master cell group (MCG), a secondary cell group (SCG), and a PUCCH cell group. The MCG and the SCG may be groups configured in dual connectivity (DC). The PUCCH cell group may be a group configured in PUCCH transmission.

In Rel. 17 (or later versions), it is also assumed that beam failure detection/beam failure recovery (for example, per-TRP BFR) is performed for each plurality of TRPs in a certain cell. For example, it is also conceivable that scheduling request (SR) transmission is supported for BFD/BFR for each TRP/in units of a TRP.

### (Example of SR Resource/PUCCH-SR Resource Configuration)

An SR resource/PUCCH-SR resource (described hereinafter as a PUCCH-SR resource) may be configured in certain units. The certain units may be, for example, cell groups. The PUCCH-SR resource may be interpreted as a dedicated PUCCH-SR resource, an SR PUCCH resource, or an SR-PUCCH resource.

For example, up to X PUCCH-SR resources may be configured/supported in a cell group. X may be a fixed value (for example, X = 2), or may correspond to the number of TRPs to be configured/applied. For SR configuration, at least one of SR configuration 0, SR configuration 1, and SR configuration 2 below may be supported.

### <SR Configuration 0>

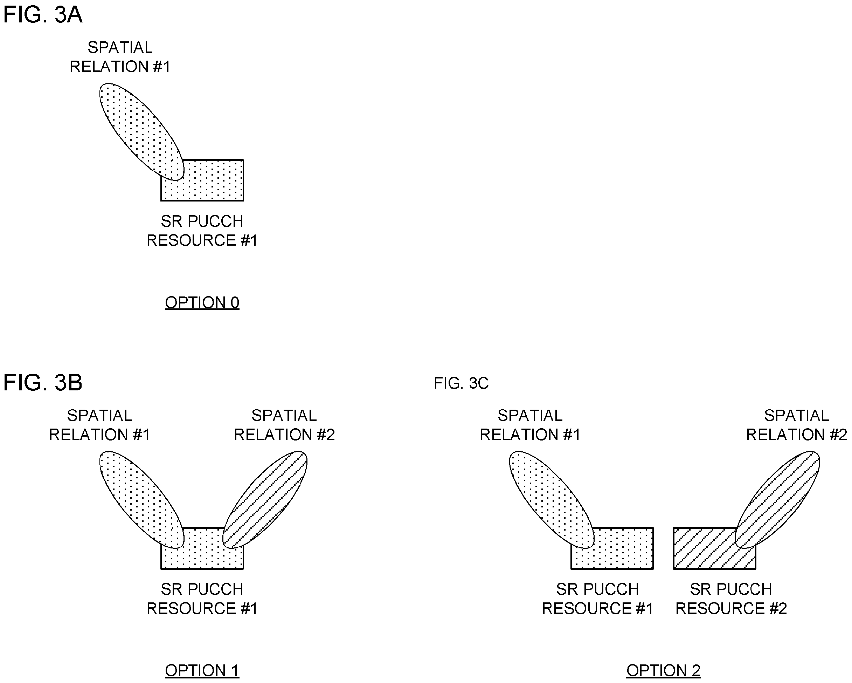

X₀ PUCCH resources (or SR PUCCHs) may be configured for an SR (for example, an SR index/SchedulingRequestID) in a cell group, and Y₀ spatial relations may be configured for the PUCCH resources. FIG. 3A shows X₀ = 1 and Y₀ = 1 (see FIG. 3A), but is not limited to this.

FIG. 3A shows a case where one SR PUCCH resource (here, SR PUCCH resource #1) is configured for an SR configured in a cell group (or an SpCell), and where one spatial relation (here, spatial relation #1) is configured for the SR PUCCH resource. Note that numbers for X₀ and Y₀ are not limited to this.

An SR configuration method for SCell BFR in Rel. 16 may be employed in SR configuration 0.

### <SR Configuration 1>

Up to X₁ PUCCH resources (for example, dedicated PUCCH-SR resources) in a cell group may be configured for an SR (for example, an SR index/SchedulingRequestID) for each cell group, and Y₁ spatial relations may be configured for the PUCCH resources. FIG. 3B shows X₁ = 1 and Y₁ = 2 (see FIG. 3B), but is not limited to this. A PUCCH resource corresponding to spatial relation #1 and a PUCCH resource corresponding to spatial relation #2 may be associated with respective different TRPs.

FIG. 3B shows a case where one SR PUCCH resource (here, SR PUCCH resource #1) is configured for an SR configured in a cell group (or an SpCell), and where two spatial relations (here, spatial relation #1 and spatial relation #2) are configured for the SR PUCCH resource. Note that numbers for X₁ and Y₁ are not limited to this.

### <SR Configuration 2>

Up to X₂ PUCCH resources (for example, dedicated PUCCH-SR resources) in a cell group are configured for an SR (for example, an SR index/SchedulingRequestID) for each cell group, and Y₂ spatial relations are configured for each PUCCH resource. FIG. 3C shows X₂ = 2 (or two or more) and Y₂ = 1 (see FIG. 3C), but is not limited to this.

FIG. 3C shows a case where two SR PUCCH resources (here, SR PUCCH resource #1 and SR PUCCH resource #2) are configured for an SR configured in a cell group (or an SpCell), and where one spatial relation is configured for each SR PUCCH resource (here, spatial relation #1 and spatial relation #2). FIG. 3C shows a case where different spatial relations are configured for SR PUCCH resource #1 and SR PUCCH resource #2, but the same spatial relation may be configured. Note that numbers for X₂ and Y₂ are not limited to this. A plurality of spatial relations may be configured for each PUCCH resource.

The UE may receive, from a network (for example, a base station) by using higher layer signaling/DCI, at least one of information related to an SR (for example, an SR index/SchedulingRequestID) in a cell group, information related to a PUCCH resource (for example, a PUCCH-SR resource) in the cell group, and information related to a spatial relation (for example, spatial relation) configured for the PUCCH resource.

The information related to the SR may be at least one of information indicating an SR index (or SchedulingRequestID) to be configured and information indicating the number of SRs to be configured. The information related to the PUCCH resource in the cell group may be at least one of information indicating a PUCCH resource and information indicating the number of PUCCH resources to be configured. The information related to the spatial relation may be at least one of information indicating a spatial relation and information indicating the number of spatial relations to be configured. In the present disclosure, the spatial relation (for example, spatial relation), a beam, a spatial filter, a spatial domain filter, a TCI state, and QCL may be interchangeably interpreted.

For each cell (for example, a cell included in a cell group), the UE may receive information related to configuration of per-cell/per-TRP BFR from the network (for example, the base station) by using higher layer signaling/DCI. The information related to the configuration of the per-cell/per-TRP BFR may be information indicating the presence or absence of configuration/application of per-cell/per-TRP BFR. Alternatively, the information related to the configuration of the per-cell/per-TRP BFR may be information indicating a BFR type (per-cell/per-TRP BFR or cell-specific BFR).

The UE may control transmission of an SR or a PUCCH-SR on the basis of at least one of the number of SRs (or the number of SR indexes) configured for each cell group and a BFR type (for example, per-TRP BFR/per-cell BFR) configured for/applied to a specific cell included in a cell group. In this case, the UE may control transmission of an SR or a PUCCH-SR on the basis of at least one of the number of PUCCH resources to be configured and the number of spatial relations configured for (or corresponding to) a PUCCH resource.

Respective PUCCH-SR resources may correspond to different TRPs when applied/configured. When beam failure recovery is triggered by detection of beam failure, a PUCCH-SR resource may be selected on the basis of a cell in which the beam failure has been detected. For example, when beam failure corresponding to a first TRP out of the first TRP and a second TRP configured in a certain cell has been detected, the UE may transmit an SR (or a PUCCH) by using a PUCCH-SR resource corresponding to the second TRP.

On the other hand, when the cell group includes a plurality of cells, the SR (or the PUCCH) is transmitted in a specific cell (for example, an SpCell/PUCCH SCell) out of the plurality of cells. In this case, how to control UE operation in a case where beam failure for a TRP differs between cells (for example, a case where beam failure is detected in a TRP differing between cells or a case where a TRP differing between cells is configured) becomes an issue.

### <Case 1>

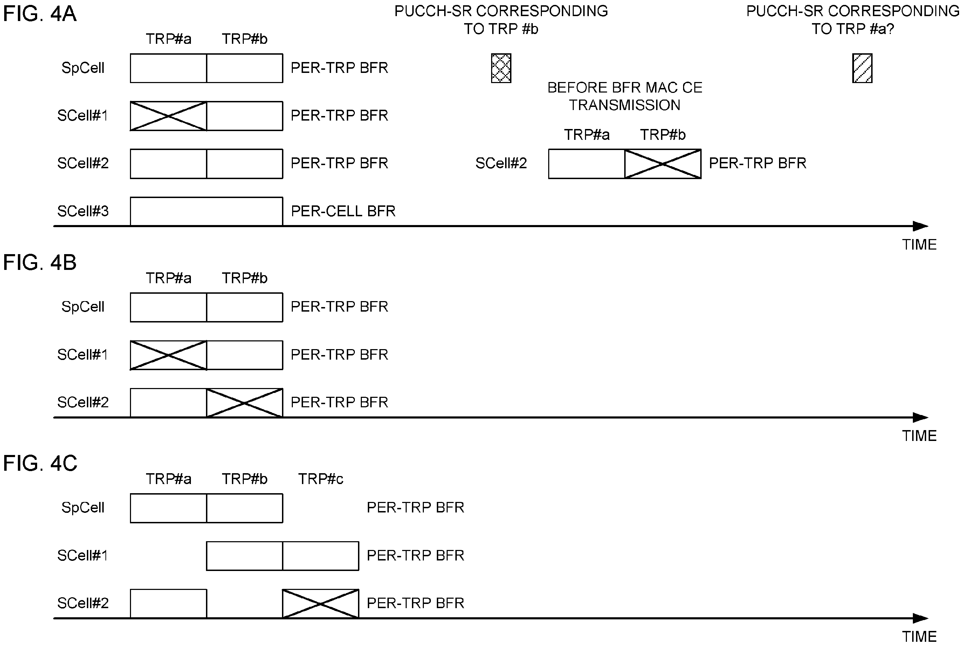

Assume a case where, in an SCell for which per-TRP beam failure detection (per-TRP BF) is supported, a BFR SR (also referred to as an SR for BFR) is triggered on the basis of beam failure in one TRP (for example, TRP #a), and an SR PUCCH resource is transmitted (see FIG. 4A). The per-TRP beam failure detection (per-TRP BF) may be interpreted as per-TRP BFR.

FIG. 4A shows a case where a certain cell group includes an SpCell and SCell #1 to SCell #3, per-TRP BFR is configured for the SpCell and SCell #1 to SCell #2, and per-cell BFR is configured for SCell #3. FIG. 4A shows a case where when beam failure in TRP #a of SCell #1 is detected, the UE transmits a BFR SR by using TRP #b of the SpCell (or an SR PUCCH resource corresponding to TRP #b).

In this case, a PUSCH for a BFR MAC CE is scheduled by a UL grant transmitted from the base station on the basis of the transmission of the BFR SR. However, a case where beam failure in another TRP (for example, TRP #b or both of TRP #a and TRP #b) is detected in another SCell before transmission of the BFR MAC CE/before cancellation of the BFR SR is also conceivable.

For example, in FIG. 4A, a case that after the SR PUCCH resource corresponding to TRP #b is transmitted on the basis of the beam failure in TRP #a of SCell #1, beam failure in TRP #b of SCell #2 is detected before the BFR MAC CE is transmitted is also conceivable. How to control BFR procedure (for example, UE operation) in such a case becomes an issue. For example, whether to perform BFR SR transmission by using TRP #a of the SpCell (or an SR PUCCH resource corresponding to TRP #a) becomes an issue.

### <Case 2>

In a plurality of SCells, a case where per-TRP beam failure is detected for one TRP in a certain period (for example, at the same time), and where a TRP in which beam failure is detected differs between the SCells is also assumed (see FIG. 4B).

FIG. 4B shows a case where a certain cell group includes an SpCell and SCell #1 to SCell #2, and per-TRP BFR is configured for the SpCell and SCell #1 to SCell #2. FIG. 4B shows a case where the UE has detected beam failure in TRP #a of SCell #1 and TRP #b of SCell #2.

How to control BFR procedure (for example, UE operation) in such a case becomes an issue. For example, when a BFR SR is transmitted in the SpCell, which of an SR PUCCH resource corresponding to TRP #a or an SR PUCCH resource corresponding to TRP #b is used becomes an issue.

### <Case 3>

A case where a TRP of an SpCell (for example, a TRP configured for the SpCell) and a TRP of an SCell (for example, a TRP configured for the SCell) are different from each other is also assumed (see FIG. 4C).

FIG. 4C shows a case where a certain cell group includes an SpCell and SCell #1 to SCell #2, and per-TRP BFR is configured for the SpCell and SCell #1 to SCell #2. FIG. 4C shows a case where TRP #a and TRP #b are configured for the SpCell, TRP #b and TRP #c are configured for SCell #1, and TRP #a and TRP #c are configured for SCell #2. FIG. 4C shows a case where beam failure in TRP #c of SCell #2 is detected.

How to control BFR procedure (for example, UE operation) in such a case becomes an issue. For example, which SR PUCCH resource corresponding to which TRP is used when a BFR SR is transmitted in the SpCell becomes an issue.

The inventors of the present invention focused on respective cases where beam failure recovery procedure (for example, UE operation based on beam failure detection/beam failure recovery request/beam failure recovery) is applied in units of a TRP, studied SR configuration/SR transmission methods in such cases, and came up with the idea of the present embodiment.

Embodiments according to the present disclosure will be described in detail with reference to the drawings as follows. Respective aspects may each be employed individually, or may be employed in combination. Note that each aspect below may be employed in at least one of case 1 to case 3 described above, or may be employed in another case. That is, the present embodiment may be employed without being limited to case 1 to case 3 described above.

In the present disclosure, the UE may be a UE that performs transmission/reception to/from a TRP by using a plurality of panels. Each panel may correspond to a different TRP, one panel may correspond to a plurality of TRPs, or the plurality of panels may correspond to one TRP.

In the present disclosure, a panel (or a panel index) of the UE may correspond to a specific group. In this case, the UE may assume that a beam/RS of each group is measured in each panel of the UE. The UE may assume that beams of a plurality of groups are received simultaneously (by using different panels).

In the present disclosure, a TRP and each of a panel of the TRP (or base station), an RS group, an antenna port group, a spatial relation group, a QCL group, a TCI state, a TCI state group, a CORESET group, a CORESET pool, and the like may be interchangeably interpreted. Also, a TRP index and each of an RS group index, an antenna port group index, a QCL group index, a TCI state index, a TCI state group index, a CORESET group index, a CORESET pool index, and the like may be interchangeably interpreted.

In the present disclosure, a panel of the UE and each of an RS group, an antenna port group, a spatial relation group, a QCL group, a TCI state group, a CORESET group, and the like may be interchangeably interpreted.

In the present disclosure, the panel may be associated with a group index of an SSB/CSI-RS group. In the present disclosure, the panel may be associated with a TRP. In the present disclosure, the plurality of panels may be associated with a group index of group beam-based reporting. In the present disclosure, the panel may be associated with a group index of an SSB/CSI-RS group for group beam-based reporting.

In the present disclosure, a serving cell/cell may be interpreted as a PCell, a PSCell, an SpCell, or an SCell. Descriptions below use, as an example, a case where two TRPs correspond to a serving cell, but three or more TRPs may correspond to the serving cell.

In the present disclosure, a BFD RS with which beam failure is detected, a failed BFD RS, a TRP in which beam failure is detected, a failed TRP, a UE panel with detection of beam failure, and a failed UE panel may be interchangeably interpreted.

In the present disclosure, "A/B" may be interpreted as "at least one of A and B" or "A and B." In the present disclosure, "A/B/C" may be interpreted as "at least one of A, B, and C."

### (First Aspect)

In a first aspect, a case where a PUCCH resource for a BFR SR is controlled on the basis of a type of beam failure detection or beam failure recovery configured for/applied to an SpCell/SCell will be described.

In the present disclosure, the SpCell may be at least one of a primary cell (PCell) and a primary secondary cell (PSCell). Alternatively, the SpCell may be interpreted as a cell in which PUCCH transmission is supported.

The type of beam failure detection (BFD) or beam failure recovery (BFR) may indicate a unit in which beam failure detection is performed or a unit in which beam failure recovery is performed. For example, either BFR in units of a cell (per-cell BFR) or BFR in units of a TRP (per-TRP BFR) may be configured. The per-cell/per-TRP BFR may be interpreted as per-cell BFD/per-TRP BFD. "In units of a cell/TRP" may be interpreted as "for each cell/TRP."

A PUCCH resource for a BFR SR configured for a certain cell group/SpCell (or a PUCCH resource configured for a BFR SR) may be controlled on the basis of the number of beam failure detection reference signal (BFD-RS) sets configured for a BFR type configured for an SpCell/configured for an SpCell (option 1).

Alternatively, the PUCCH resource for the BFR SR configured for the certain cell group/SpCell may be controlled on the basis of the number of beam failure detection reference signal (BFD-RS) sets configured for a BFR type configured for an SCell/configured for an SpCell (option 2).

### <Option 1>

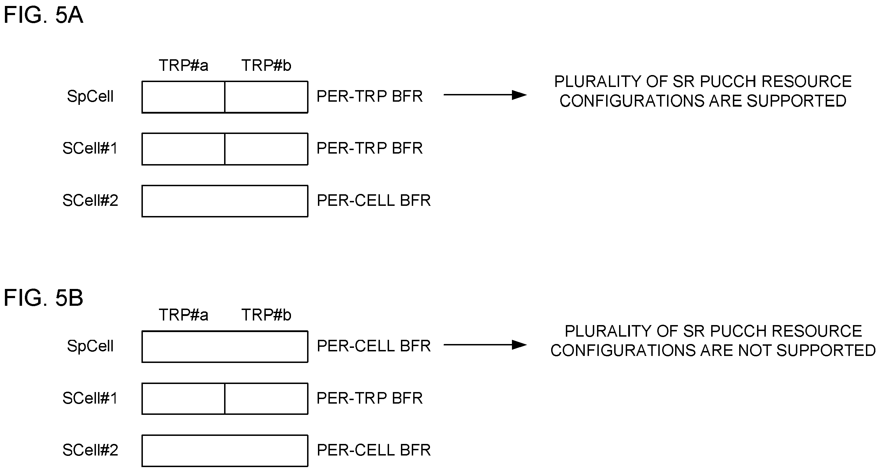

For the BFR SR, configuration of a plurality of (for example, two) PUCCH resources may be supported only when per-TRP BFR is configured (or when a plurality of (for example, two) BFD-RS sets are configured) for the SpCell (see FIG. 5A).

FIG. 5A shows a case where a certain cell group includes an SpCell and SCell #1 to SCell #2, per-TRP BFR is configured for the SpCell and SCell #1, and per-cell BFR is configured for SCell #2. In this case, configuration of a plurality of SR PUCCH resources may be supported for the cell group (or SpCell).

### [Per-cell BFR/One PUCCH Resource]

When per-cell BFR is configured (for example, when one BFD-RS set is configured) for the SpCell or when BFR is not configured for the SpCell, a UE may assume that up to one PUCCH resource is configured for the BFR SR regardless of whether per-cell/per-TRP BFR is configured for another cell (for example, any SCell) (see FIG. 5B).

FIG. 5B shows a case where a certain cell group includes an SpCell and SCell #1 to SCell #2, per-TRP BFR is configured for SCell #1, and per-cell BFR is configured for the SpCell and SCell #2. In this case, configuration of a plurality of SR PUCCH resources may not be supported (one SR PUCCH resource may be configured) for the cell group (or SpCell).

In a case where per-cell BFR is configured for the SpCell, when BFR is triggered by SCell BFR (regardless of a BFR type), a method similar to that of Rel. 16 may be employed in SR trigger procedure.

### [Per-TRP BFR/Two PUCCH Resources]

When per-TRP BFR is configured for the SpCell, and the BFR SR is configured by using a plurality of (for example, two) PUCCH resources, SR PUCCH resources may be associated with respective TRPs. A method described in a second aspect may be employed in UE operation (for example, BFR procedure) in this case.

When a TRP of the SpCell and a TRP of the SCell are the same (for example, when the same TRP is configured in common for the SpCell and the SCell), an association between a TRP of each cell and an SR PUCCH resource is enabled. For example, when BFR for one TRP is triggered in a certain cell, transmission of the BFR SR may be controlled by using a PUCCH resource associated with a TRP in which beam failure is not detected (for example, a non-failed TRP).

In this case, a higher layer parameter to configure a TRP relationship between a plurality of cells (or CCs) (for example, an association between TRPs and PUCCH resources) may be introduced. The UE may control BFR operation on the basis of configuration configured using a higher layer. A CC list may be created for serving cells for which the same TRP relationship (for example, the same BFR SR configuration as that of the SpCell) can be assumed.

For serving cells having the same TRP relationship across cells (or CCs), when BFR for one TRP is triggered in a certain cell, a PUCCH resource associated with a TRP without occurrence of beam failure may be transmitted. When per-cell BFR or per-TRP BFR with two TRP failures is triggered, at least one of Alt. 1-1 to Alt. 1-3 described below may be employed.

When indication/configuration of a TRP relationship being the same between cells (or CCs) is absent or when BFR is triggered in a serving cell in which indication/configuration of a TRP relationship differing between the cells is present, at least one of Alt. 1-1 to Alt. 1-3 described below may be employed.

When a case where a TRP of the SpCell and a TRP of the SCell are configured to be different from each other is considered, the SR PUCCH resource and the TRP of the SCell may not be associated with each other. Thus, when per-cell BFR/per-TRP BFR has occurred in the SCell, it is only necessary that either SR PUCCH resource for the PSCell is used. Thus, after the BFR SR is triggered, the UE may employ at least one of Alt. 1-1 to Alt. 1-3 below.

### [Alt. 1-1]

The UE transmits the BFR SR by using a default SR PUCCH resource.

### [Alt. 1-2]

The UE transmits the BFR SR by using two SR PUCCH resources.

### [Alt. 1-3]

The UE transmits the BFR SR by using a randomly selected SR PUCCH resource.

### <Option 2>

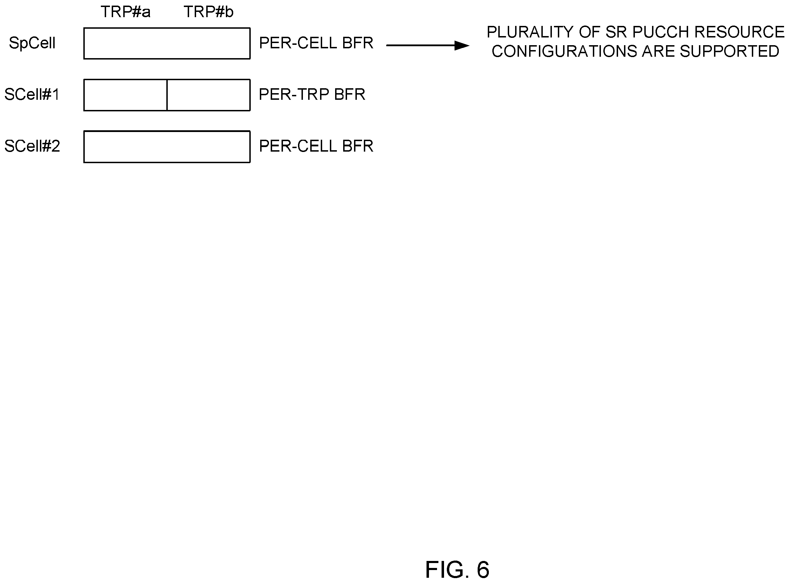

For the BFR SR, even in a case where per-cell BFR is configured (or a case where one BFD-RS set is configured) for the SpCell, a BFR SR having up to two PUCCH resources may be configured when per-TRP BFR is configured for one SCell (see FIG. 6).

FIG. 6 shows a case where a certain cell group includes an SpCell and SCell #1 to SCell #2, per-TRP BFR is configured for SCell #1, and per-cell BFR is configured for the SpCell and SCell #2. In this case, configuration of a plurality of SR PUCCH resources may be supported for the cell group (or SpCell).

Note that for per-TRP BFR corresponding to the SpCell (or when a plurality of (for example, two) BFD-RS sets are configured), two PUCCH resources may be configured for the BFR SR (see FIG. 5A).

When per-cell BFR is configured for the SpCell, and one SR PUCCH resource is configured, operation in Rel. 16 may be used.

When per-cell BFR is configured for the SpCell, and two SR PUCCH resources are configured, a third aspect may be employed.

When per-TRP BFR is configured for the SpCell, and two SR PUCCH resources are configured, a second aspect may be employed.

### (Second Aspect)

In a second aspect, an example of BFR procedure in a case where a plurality of SR PUCCH resources are configured in a cell group/SpCell will be described. For example, an example of UE operation in a case where other beam failure occurs after a BFR SR is triggered in a certain cell and before a BFR MAC CE is transmitted will be described. Triggering of the BFR SR may be interpreted as a BFR trigger.

Assume a case where per-TRP BFR is configured for the SpCell, and where a BFR SR having a plurality of (for example, two) PUCCH resources are configured. In this case, case 2-1 and case 2-2 are conceivable.

### <Case 2-1>

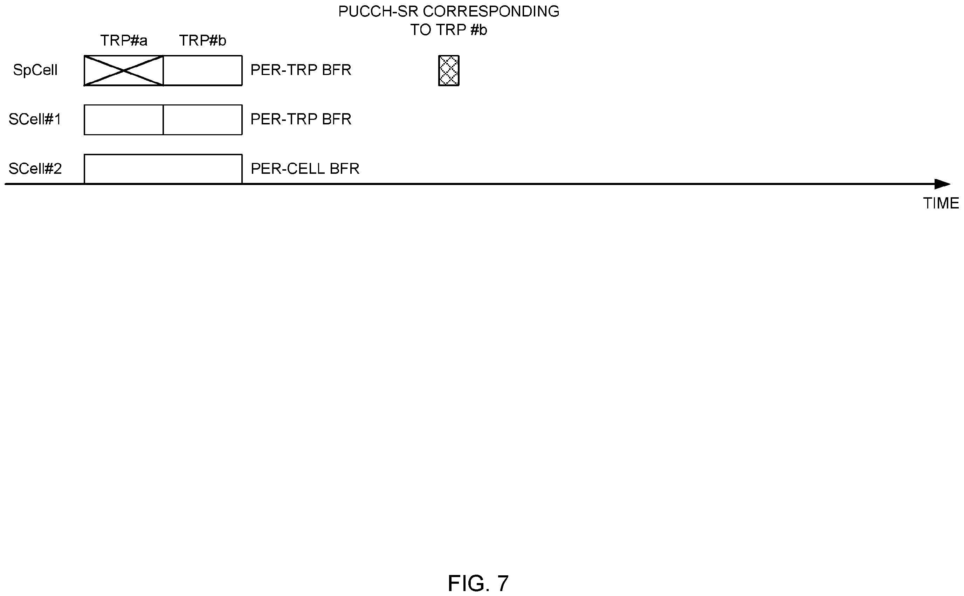

When in the SpCell, beam failure is detected for a certain TRP, and BFR/BFR SR is triggered, only one PUCCH resource associated with another TRP (non-failed TRP) of the SpCell may be transmitted (see FIG. 7).

FIG. 7 shows a case where a certain cell group includes an SpCell and SCell #1 to SCell #2, per-TRP BFR is configured for the SpCell and SCell #1, and per-cell BFR is configured for SCell #2. FIG. 7 shows a case where when beam failure in TRP #a of the SpCell is detected, the UE transmits a BFR SR by using TRP #b of the SpCell (or an SR PUCCH resource corresponding to TRP #b).

In this case, after the SR is triggered (or the PUCCH resource is transmitted) and before the BFR MAC CE is transmitted, case 2-1-1 to case 2-1-3 below are assumed.

### <Case 2-1-1>

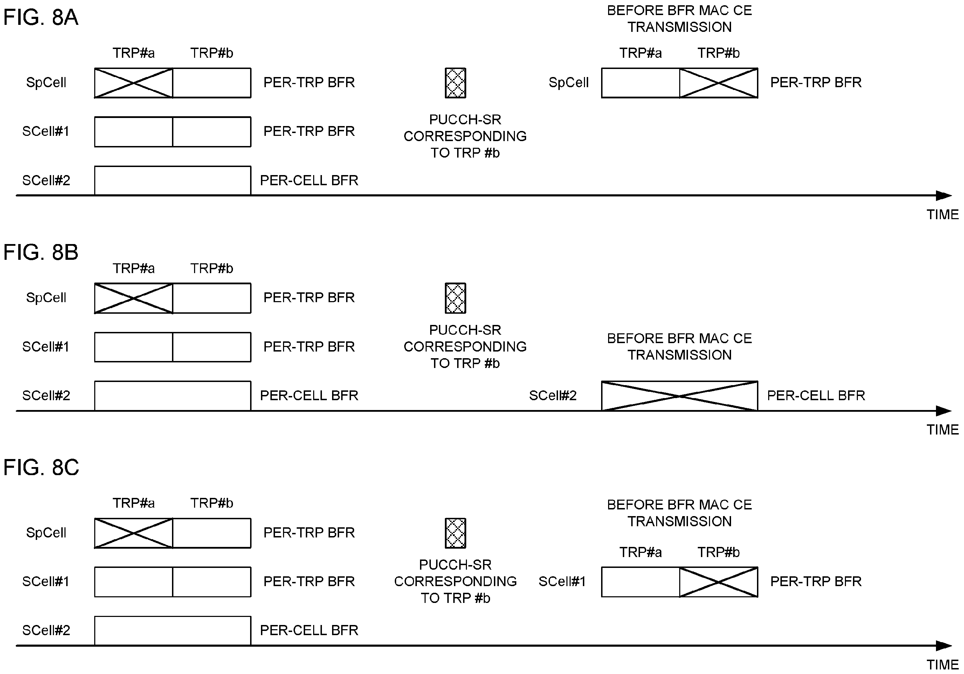

Assume a case where before the BFR MAC CE is transmitted, beam failure is detected also in another TRP (for example, TRP #b) of the SpCell, and BFR (or a BFR SR) is triggered (see FIG. 8A). In such a case, at least one of option 2-0 to option 2-3 below may be employed.

### [Option 2-1]

Another SR PUCCH resource may be transmitted. Such another PUCCH resource may be, for example, a PUCCH resource (here, a PUCCH resource corresponding to TRP #a) different from a PUCCH resource (here, a PUCCH resource corresponding to TRP #b) used in the first BFR.

### [Option 2-2]

A random access preamble (for example, a PRACH, message 1, or message A) may be transmitted, and a pending BFR SR may be canceled.

### [Option 2-3]

A BFR request (for example, SR transmission/BFR MAC CE transmission) may be controlled on the basis of a new timer. The timer may be started when BFR for another TRP (TRP #b in which beam failure has newly occurred) of the SpCell is triggered.

The UE may control so as not to perform operation for new UE operation before the timer expires. For example, the UE may perform operation, such as waiting for a UL grant transmitted from a network/base station or performing monitoring of the UL grant. After the timer expires, the UE may control the UE operation on the basis of a status of the BFR MAC CE at a timing of the expiration of the timer. For example, the UE may employ at least one of UE operation 2-3-1 to UE operation 2-3-3 below.

### <<UE Operation 2-3-1>>

When a BFR MAC CE for two TRPs of the SpCell is transmitted, the UE may cancel the BFR SR.

### <<UE Operation 2-3-2>>

When a BFR MAC CE for a TRP (for example, TRP #a) of the SpCell in which beam failure has occurred first is transmitted, but the BFR MAC CE does not include information about another TRP of the SpCell, the UE may employ option 2-1.

### <<UE Operation 2-3-3>>

When the BFR MAC CE is not transmitted or when a MAC CE including information about two TRPs of the SpCell is not transmitted (or when the MAC CE does not include the information about another TRP of the SpCell), the UE may employ option 2-2.

### [Option 2-0]

The UE may perform control autonomously (UE implementation). For example, the UE may wait for reception of a UL grant for a certain period. When failing to receive the UL grant, the UE may employ at least one of UE operation 2-3-1 to UE operation 2-3-3 of option 2-3.

### <Case 2-1-2>

Assume a case where before a BFR MAC CE is transmitted, BFR for an SCell (here, SCell #2) is triggered by per-cell BFR (or per-TRP BFR due to beam failure in two TRPs) (see FIG. 8B). In such a case, at least one of option 2-0, option 2-1, and option 2-4 below may be employed.

### [Option 2-1]

Another SR PUCCH resource may be transmitted. Such another PUCCH resource may be, for example, a PUCCH resource (here, a PUCCH resource corresponding to TRP #a) different from a PUCCH resource used in the first BFR.

### [Option 2-4]

A BFR request (for example, SR transmission/BFR MAC CE transmission) may be controlled on the basis of a new timer. The timer may be started when BFR for the SCell is triggered.

The UE may control so as not to perform operation for new UE operation before the timer expires. For example, the UE may perform operation, such as waiting for a UL grant from the network/base station or performing monitoring of the UL grant. After the timer expires, the UE may control the UE operation on the basis of a status of the BFR MAC CE at a timing of the expiration of the timer. For example, the UE may employ at least one of UE operation 2-4-1 to UE operation 2-4-3 below.

### <<UE Operation 2-4-1>>

When a BFR MAC CE is transmitted, and the BFR MAC CE includes information about the SpCell/SCell, the UE may cancel the BFR SR.

### <<UE Operation 2-4-2>>

When a BFR MAC CE for the SpCell is transmitted (a pending BFR SR is canceled), but the BFR MAC CE does not include information about the SCell, an SR may be triggered by the SCell, and a default PUCCH resource may be transmitted, two PUCCH resources may be transmitted, or a random PUCCH resource may be transmitted.

### <<UE Operation 2-4-3>>

When the BFR MAC CE is not transmitted, the UE may transmit a random access preamble (for example, a PRACH), and may cancel a BFR SR (for example, a pending BFR SR).

### [Option 2-0]

The UE may perform control autonomously (UE implementation). For example, the UE may wait for reception of a UL grant for a certain period. When failing to receive the UL grant, the UE may employ at least one of UE operation 2-4-1 to UE operation 2-4-3 of option 2-4.

### <Case 2-1-3>

Assume a case where before a BFR MAC CE is transmitted, BFR for an SCell is triggered by per-TRP BFR due to beam failure in one TRP (see FIG. 8C). FIG. 8C shows a case where beam failure occurs in TRP #b of SCell #1, but can also be similarly employed in a case where beam failure occurs in TRP #a of SCell #1. In such a case, at least one of option 2-0, option 2-5, and option 2-6 below may be employed.

### [Option 2-5]

Another SR PUCCH resource (for example, a PUCCH resource corresponding to TRP #a) may be transmitted. In this case, at least one of whether a TRP in which beam failure is detected (here, TRP #b)/non-failed TRP (here, TRP #a) is associated with such another PUCCH resource and indication of signaling for a TRP relationship between cells (or CCs) may be considered.

When a TRP configured in SCell #1 is not associated with such another PUCCH resource, a certain PUCCH resource/PRACH or the like may be used. Alternatively, such another PUCCH resource may be selected without consideration of whether a TRP configured for SCell #1 is associated with such another PUCCH resource and the indication of the signaling for the TRP relationship between the cells.

### [Option 2-6]

A BFR request (for example, SR transmission/BFR MAC CE transmission) may be controlled on the basis of a new timer. The timer may be started when BFR for the SCell is triggered.

The UE may control so as not to perform operation for new UE operation before the timer expires. For example, the UE may perform operation, such as waiting for a UL grant from the network/base station or performing monitoring of the UL grant. After the timer expires, the UE may control the UE operation on the basis of a status of the BFR MAC CE at a timing of the expiration of the timer. For example, the UE may employ at least one of UE operation 2-6-1 to UE operation 2-6-3 below.

### <<UE Operation 2-6-1>>

When a BFR MAC CE is transmitted, and the BFR MAC CE includes information about the SpCell/SCell, the UE may cancel the BFR SR.

### <<UE Operation 2-6-2>>

When a BFR MAC CE for the SpCell is transmitted (a pending BFR SR is canceled), but the BFR MAC CE does not include information about the SCell, an SR may be triggered by the SCell, and a default PUCCH resource may be transmitted, two PUCCH resources may be transmitted, or a random PUCCH resource may be transmitted. Alternatively, a PUCCH resource associated with a TRP in which beam failure is not detected may be transmitted with consideration (or without consideration) of indication of signaling for a TRP relationship between cells (or CCs).

### <<UE Operation 2-6-3>>

When the BFR MAC CE is not transmitted, the UE may transmit a random access preamble (for example, a PRACH), and may cancel a BFR SR (for example, a pending BFR SR).

### [Option 2-0]

The UE may perform control autonomously (UE implementation). For example, the UE may wait for reception of a UL grant for a certain period. When failing to receive the UL grant, the UE may employ at least one of UE operation 2-6-1 to UE operation 2-6-3 of option 2-6.

### <Case 2-2>

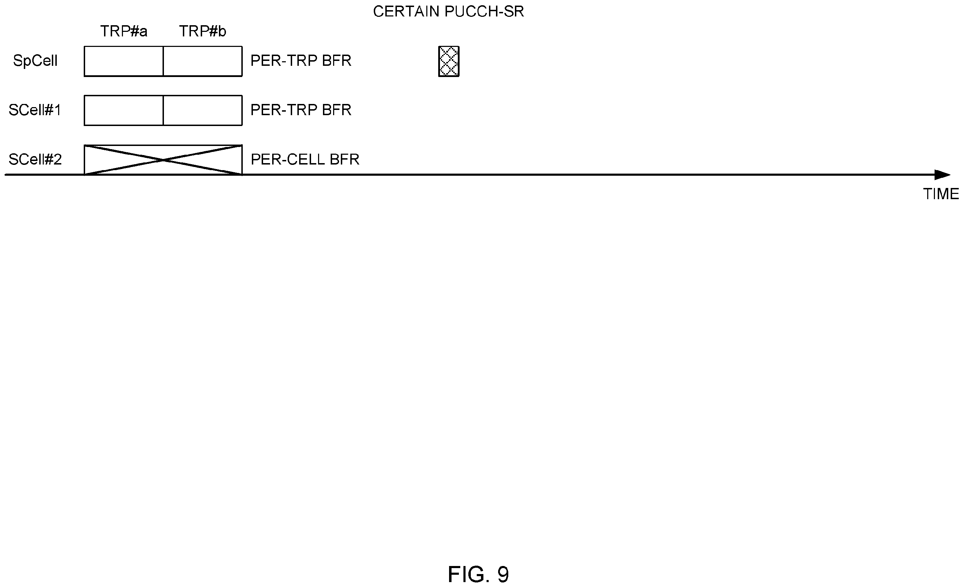

Assume a case where BFR/SR is triggered by BFR for the SCell (for example, per-cell BFR/per-TRP BFR), and where a PUCCH resource is transmitted (see FIG. 9).

FIG. 9 shows a case where a certain cell group includes an SpCell and SCell #1 to SCell #2, per-TRP BFR is configured for the SpCell and SCell #1, and per-cell BFR is configured for SCell #2. FIG. 9 shows a case where when beam failure is detected in SCell #2 in units of a cell, the UE transmits a BFR SR by using a certain TRP of the SpCell (or a certain SR PUCCH resource corresponding to the certain TRP).

The certain SR PUCCH resource may be a default/random PUCCH resource, a PUCCH resource associated with a TRP in which beam failure is detected, or two PUCCH resources.

In this case, after the SR is triggered (or the PUCCH resource is transmitted) and before the BFR MAC CE is transmitted, case 2-2-1 to case 2-2-3 below are assumed.

### <Case 2-2-1>

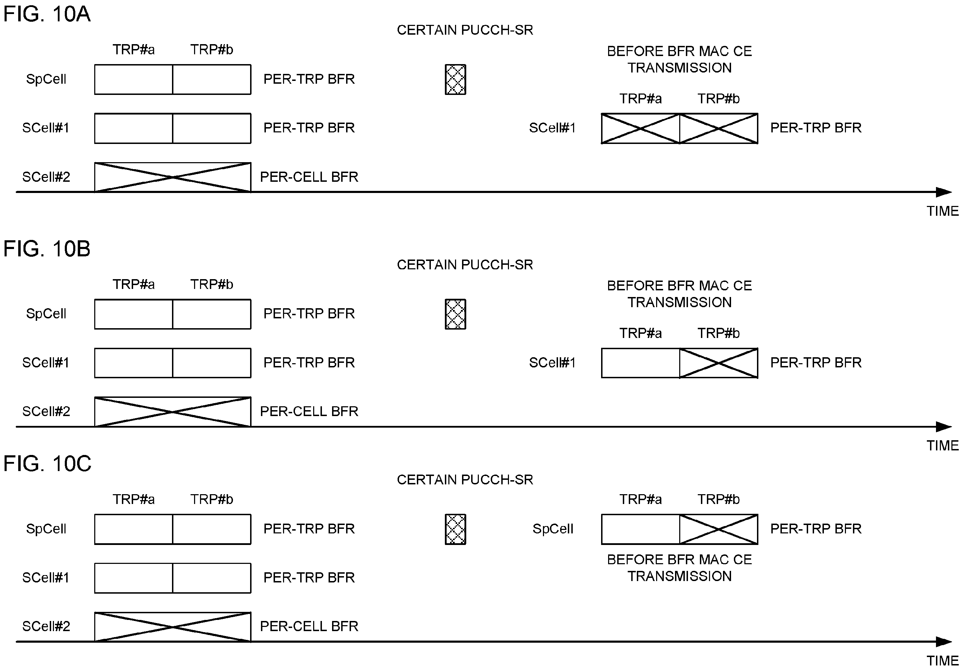

Assume a case where before a BFR MAC CE is transmitted, BFR for the second SCell (for example, 2nd SCell) is triggered by per-cell BFR or per-TRP BFR based on beam failure in two TRPs (see FIG. 10A). FIG. 10A shows a case where BFR is triggered in both TRP #a and TRP #b of SCell #1 (2nd SCell).

In such a case, at least one of option 2-0, option 2-1, and option 2-7 below may be employed.

### [Option 2-1]

Another SR PUCCH resource may be transmitted. Such another PUCCH resource may be, for example, a PUCCH resource different from a PUCCH resource used in the first BFR.

### [Option 2-7]

A BFR request (for example, SR transmission/BFR MAC CE transmission) may be controlled on the basis of a new timer. The timer may be started when BFR for the second SCell is triggered.

The UE may control so as not to perform operation for new UE operation before the timer expires. For example, the UE may perform operation, such as waiting for a UL grant from the network/base station or performing monitoring of the UL grant. After the timer expires, the UE may control the UE operation on the basis of a status of the BFR MAC CE at a timing of the expiration of the timer. For example, the UE may employ at least one of UE operation 2-7-1 to UE operation 2-7-3 below.

### <<UE Operation 2-7-1>>

When a BFR MAC CE is transmitted, and the BFR MAC CE includes information about two SCells, the UE may cancel the BFR SR.

### <<UE Operation 2-7-2>>

When a BFR MAC CE for first SCell #2 (1st SCell) is transmitted (a pending BFR SR is canceled), but the BFR MAC CE does not include information about the second SCell, an SR may be triggered by second SCell #1, and a default PUCCH resource may be transmitted, two PUCCH resources may be transmitted, or a random PUCCH resource may be transmitted. Alternatively, a PUCCH resource associated with a TRP in which beam failure is not detected may be transmitted with consideration (or without consideration) of indication of signaling for a TRP relationship between cells (or CCs).

### <<UE Operation 2-7-3>>

When the BFR MAC CE is not transmitted, the UE may transmit a random access preamble (for example, a PRACH), and may cancel a BFR SR (for example, a pending BFR SR).

### [Option 2-0]

The UE may perform control autonomously (UE implementation). For example, the UE may wait for reception of a UL grant for a certain period. When failing to receive the UL grant, the UE may employ at least one of UE operation 2-8-1 to UE operation 2-8-3 of option 2-8.

### <Case 2-2-2>

Assume a case where before a BFR MAC CE is transmitted, BFR for the second SCell (for example, 2nd SCell) is triggered by per-TRP BFR based on beam failure in one TRP (see FIG. 10B). FIG. 10B shows a case where BFR is triggered in TRP #b of SCell #1 (2nd SCell).

In such a case, at least one of option 2-0, option 2-5, and option 2-8 below may be employed.

### [Option 2-5]

Another SR PUCCH resource may be transmitted. Such another PUCCH resource may be, for example, a PUCCH resource different from a PUCCH resource used in the first BFR.

In this case, at least one of whether a TRP in which beam failure is detected (here, TRP #b)/non-failed TRP (here, TRP #a) is associated with such another PUCCH resource and indication of signaling for a TRP relationship between cells (or CCs) may be considered.

When a TRP configured in SCell #1 is not associated with such another PUCCH resource, a certain PUCCH resource/PRACH or the like may be used. Alternatively, such another PUCCH resource may be selected without consideration of whether a TRP configured for SCell #1 is associated with such another PUCCH resource and the indication of the signaling for the TRP relationship between the cells.

### [Option 2-8]

A BFR request (for example, SR transmission/BFR MAC CE transmission) may be controlled on the basis of a new timer. The timer may be started when BFR for second SCell #1 is triggered.

The UE may control so as not to perform operation for new UE operation before the timer expires. For example, the UE may perform operation, such as waiting for a UL grant from the network/base station or performing monitoring of the UL grant. After the timer expires, the UE may control the UE operation on the basis of a status of the BFR MAC CE at a timing of the expiration of the timer. For example, the UE may employ at least one of UE operation 2-8-1 to UE operation 2-8-3 below.

### <<UE Operation 2-8-1>>

When a BFR MAC CE is transmitted, and the BFR MAC CE includes information about two SCells, the UE may cancel the BFR SR.

### <<UE Operation 2-8-2>>

When a BFR MAC CE for first SCell #2 (1st SCell) is transmitted (a pending BFR SR is canceled), but the BFR MAC CE does not include information about the second SCell, an SR may be triggered by second SCell #1, and a default PUCCH resource may be transmitted, two PUCCH resources may be transmitted, or a random PUCCH resource may be transmitted.

### <<UE Operation 2-8-3»

When the BFR MAC CE is not transmitted, the UE may transmit a random access preamble (for example, a PRACH), and may cancel a BFR SR (for example, a pending BFR SR).

### [Option 2-0]

The UE may perform control autonomously (UE implementation). For example, the UE may wait for reception of a UL grant for a certain period. When failing to receive the UL grant, the UE may employ at least one of UE operation 2-7-1 to UE operation 2-7-3 of option 2-7.

### <Case 2-2-3>

Assume a case where before the BFR MAC CE is transmitted, beam failure is detected in the SpCell, and BFR is triggered.

When beam failure is detected in two TRPs of the SpCell, random access preamble (for example, PRACH) transmission may be started, and a BFR SR (for example, a pending BFR SR) may be canceled.

Alternatively, assume a case where beam failure is detected in one TRP, and where a remaining PUCCH resource (for example, a PUCCH resource different from the certain SR PUCCH resource) is associated with a TRP in which beam failure is detected. The indication of signaling for the TRP relationship between the CCs may be considered, or may not be considered. In this case, PRACH transmission may be started, and a BFR SR (for example, a pending BFR SR) may be canceled.

Assume a case where beam failure occurs in one TRP, and where a transmitted PUCCH resource (for example, the certain SR PUCCH resource) is associated with a TRP in which beam failure is detected. The indication of signaling for the TRP relationship between the CCs may be considered, or may not be considered. In such a case, at least one of option 2-0, option 2-1, and option 2-9 below may be employed.

### [Option 2-1]

Another SR PUCCH resource (for example, a PUCCH resource different from the certain SR PUCCH resource) may be transmitted.

### [Option 2-9]

A BFR request (for example, SR transmission/BFR MAC CE transmission) may be controlled on the basis of a new timer. The timer may be started when BFR for the SpCell is triggered.

The UE may control so as not to perform operation for new UE operation before the timer expires. For example, the UE may perform operation, such as waiting for a UL grant from the network/base station or performing monitoring of the UL grant. After the timer expires, the UE may control the UE operation on the basis of a status of the BFR MAC CE at a timing of the expiration of the timer. For example, the UE may employ at least one of UE operation 2-9-1 to UE operation 2-9-3 below.

### <<UE Operation 2-9-1>>

When a BFR MAC CE is transmitted, and the BFR MAC CE includes information about SCell #2 and the SpCell, the UE may cancel the BFR SR.

### <<UE Operation 2-9-2>>

When a BFR MAC CE for SCell #2 is transmitted (a pending BFR SR is canceled), but the BFR MAC CE does not include information about the SpCell, an SR may be triggered by the SpCell, and a default PUCCH resource may be transmitted, two PUCCH resources may be transmitted, or a random PUCCH resource may be transmitted. Alternatively, a PUCCH resource associated with a TRP in which beam failure is not detected may be transmitted with consideration (or without consideration) of indication of signaling for a TRP relationship between cells (or CCs).

### <<UE Operation 2-9-3>>

When the BFR MAC CE is not transmitted, a random access preamble may be transmitted, and an SR (for example, a pending BFR SR) may be canceled.

### [Option 2-0]

The UE may perform control autonomously (UE implementation). For example, the UE may wait for reception of a UL grant for a certain period. When failing to receive the UL grant, the UE may employ at least one of UE operation 2-9-1 to UE operation 2-9-3 of option 2-9.

### (Third Aspect)

In a third aspect, an example of BFR procedure in a case where per-cell BFR is configured for an SpCell, and where a BFR SR having two PUCCH resources is configured (or a BFR SR for which two PUCCH resources are configured is used) (see FIG. 6) will be described.

In such a case, a UE may employ at least one of Alt. 3-1 to Alt. 3-3 below.

### [Alt. 3-1]

For a case of SCell BFR in which an SR is triggered, the UE may transmit a default PUCCH resource.

### [Alt. 3-2]

For a case of SCell BFR in which an SR is triggered, the UE may transmit two PUCCH resources.

### [Alt. 3-3]

When BFR/SR is triggered for an SCell for which per-cell BFR is configured, the UE may employ Alt. 3-1/Alt. 3-2. When BFR/SR is triggered for an SCell for which per-TRP BFR is configured, the UE may transmit a default PUCCH resource, two PUCCH resources, a random PUCCH resource, or a PUCCH resource associated with a TRP in which beam failure is not detected (non-failed TRP). The UE may select the PUCCH resource with or without consideration of indication of signaling for a TRP relationship between cells (or CCs).

Note that when an SR is triggered for BFR or when BFR is triggered in another cell before a BFR MAC CE is transmitted, any one of methods described in the second aspect may be employed.

When two PUCCH resources of the BFR SR are transmitted, the BFR MAC CE is not transmitted, and the BFR is triggered in such another cell, the UE may control UE operation autonomously (UE implementation). For example, a smart UE may control so as to wait for a UL grant from a network/base station (for example, control in the same manner as that of Rel. 16) because an SR to be triggered is absent (only one BFR SR is present).

In Rel. 16, when a BFR SR is transmitted, a BFR MAC CE is not transmitted, and BFR for another SCell is triggered, UE operation is controlled on the basis of UE implementation. When the UE waits for reception of the UL grant from the network, obtains the UL grant, and transmits a MAC CE including information about all SCells in which beam failure is detected, the SR is canceled, and the BFR is completed. When the UE obtains the UL grant and transmits a BFR MAC CE, but the BFR MAC CE does not include information about an SCell in which beam failure is newly detected, and includes only information about a cell in which beam failure has been detected before that, an SR (pending SR) triggered in a previous SCell may be canceled, and BFR for the previous SCell may be completed. On the other hand, a BFR SR for a new SCell may be triggered again.

When transmission of two PUCCH resources corresponding to an SR is supported by a higher layer parameter or the like, the UE may not assume that two PUCCH resources are configured for time resources overlapping with each other. The base station may perform control so that two PUCCH resources are not configured for the time resources overlapping with each other.

### (Fourth Aspect)

In a fourth aspect, an example of BFR procedure in a case where BFR is triggered for a plurality of cells in a certain period (for example, at the same time) will be described.

The case where the BFR is triggered simultaneously for the plurality of cells can be considered in a manner similar to that of a case where BFR is triggered for one cell, and where after a BFR SR is triggered and before a BFR MAC CE is transmitted, BFR is triggered in another cell.

Thus, in the case where the BFR is triggered simultaneously for the plurality of cells, a configuration described in the second aspect/configuration described in the third aspect may be employed.

### <Variation>

When the BFR is triggered simultaneously for the plurality of cells, the UE may employ Alt. 4-1/Alt. 4-2 below.

### [Alt. 4-1]

When beam failure is detected only in one TRP on a plurality of CCs, the UE may transmit an SR PUCCH resource corresponding to another TRP with consideration of signaling for indicating a TRP relationship between cells (or CCs). When beam failure is detected in two TRPs, the UE may control so as to transmit two PUCCH resources with consideration of the plurality of CCs.

### [Alt. 4-2]

The UE may first consider a cell with the lowest index to transmit SR PUCCH transmission in accordance with a BFD result of the cell with the lowest index. Subsequently, the UE may control BFR operation for another cell on the basis of the second aspect/third aspect.

### <BFD in 2 TRPs for 1 Cell>

A case where beam failure is detected in two TRPs for one cell can be considered in a manner similar to that of a case where per-TRP BFR is triggered for one cell, and where after a BFR SR is transmitted and before a BFR MAC CE is transmitted, the per-TRP BFR is also triggered for another TRP of the cell.

Thus, in the case where the beam failure is detected in two TRPs for one cell, a configuration described in the second aspect/configuration described in the third aspect may be employed.

### (Fifth Aspect)

In a fifth aspect, an example of BFR procedure different from that of the first to fourth aspects will be described.

A UE may employ operation described below in case 1 to case 3 of FIG. 4.

### <Case 1>

In case 1, a BFR SR is triggered by per-TRP beam failure in an SCell in which beam failure is detected in one TRP (for example, TRP #a of SCell #1), and an SR PUCCH resource is transmitted. Beam failure is detected in another TRP (for example, TRP #b of SCell #2 or both TRP #a and TRP #b of SCell #2) before a BFR MAC CE is transmitted (or before the SR is canceled), and another SCell is also detected as the per-TRP beam failure.

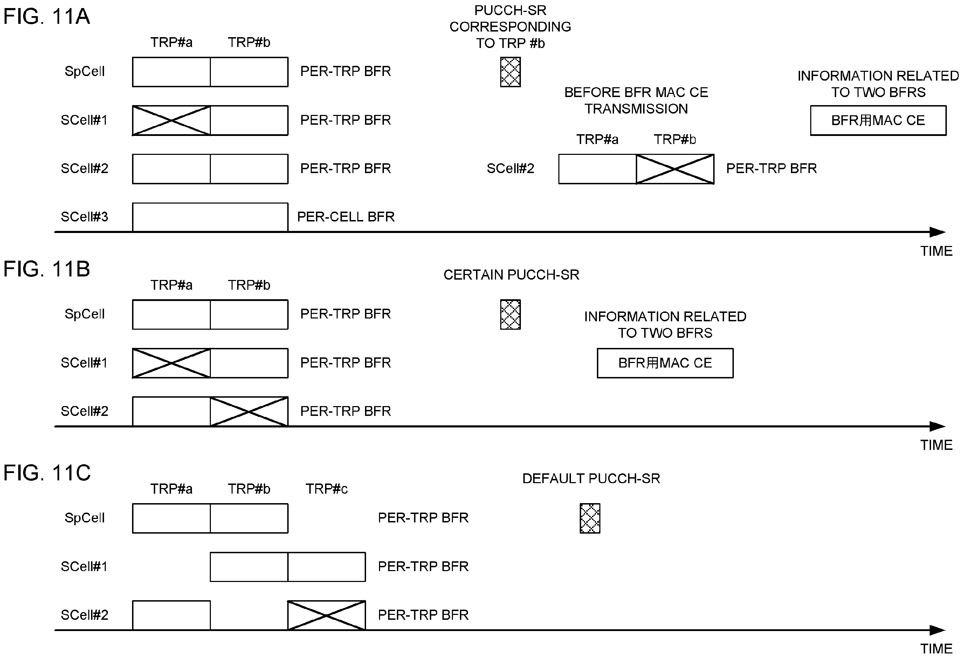

In such a case, the UE may control so as to include, in a BFR MAC CE, information about BFR occurring in both TRP #a of SCell #1 and TRP #b of SCell #2 (information related to both of the TRPs) and to transmit the BFR MAC CE without performing SR PUCCH transmission for BFR in TRP #b (see FIG. 11A).

Thus, the UE can transmit, without delay by using a BFR MAC CE, information related to two TRPs in which beam failure is detected even when beam failure is detected in another TRP after BFR/BFR SR has been triggered in a certain cell (and before transmission of a BFR MAC CE).

### <Case 2>

A case where per-TRP beam failure is detected simultaneously in a respective plurality of SCells, and where a TRP in which beam failure occurs differs between the respective SCells (for example, BF in TRP #a of SCell #1 and BF in TRP #b of SCell #2) is assumed.

In such a case, the UE may control so as to transmit one SR PUCCH to either TRP #a of SCell #1 or TRP #b of SCell #2 (see FIG. 11B). Which SR PUCCH is transmitted may be autonomously determined by the UE, or may be defined/configured beforehand. The UE may control so as to include, in a BFR MAC CE, both BFR information related to TRP #a of SCell #1 and BFR information related to TRP #b of SCell #2 and to transmit the BFR MAC CE when transmitting a BFR MAC CE of step 2.

### <Case 3>

A case where a TRP configured for an SpCell and a TRP configured for an SCell are different from each other is assumed.

In such a case, the UE may, when an SR PUCCH corresponding to a TRP in which beam failure is detected is present in any cell, control so as to transmit one SR PUCCH for a TRP in which beam failure is detected. In transmission of the BFR MAC CE of step 2, the UE may control so as to include, in a BFR MAC CE, information related to which TRP of which SCell BFR has occurred in and to transmit the BFR MAC CE.

When an SR PUCCH corresponding to a TRP in which beam failure is detected is absent in any cell, the UE may transmit a normal SR, a PUCCH SR (or SR PUCCH) for each cell, or a default PUCCH SR in order to obtain a UL grant (see FIG. 11C). In transmission of the BFR MAC CE of step 2, the UE may control so as to include, in a BFR MAC CE, information related to which TRP of which SCell BFR has occurred in and to transmit the BFR MAC CE.

When the normal SR or the PUCCH SR for each cell is absent, the UE may control to transmit a PRACH.

### (UE Capability Information)

In the above-described first to fifth aspects, a UE capability below may be configured. Note that the UE capability below may be interpreted as a parameter (for example, a higher layer parameter) configured for the UE from a network (for example, a base station).

In a case where per-TRP BFR is not configured for the SpCell, UE capability information related to whether to support a BFR SR for which two PUCCH resources are configured may be defined.

UE capability information related to whether to support notification/indication of a TRP relationship (for example, a beam relationship or a QCL type RS relationship (QCL-typed RS relationship)) between cells (or CCs) may be defined.

UE capability information related to whether to support configuration of a CC list for CCs sharing the same TRP relationship (for example, beam relationship or QCL type RS relationship (QCL-typed RS relationship)) may be defined.

UE capability information related to whether to support, after an SR for a certain cell is triggered, a new timer for BFR in another cell may be defined.

UE capability information related to whether to support transmission of two PUCCH resources for a BFR SR may be defined.

The first to fifth aspects may be employed in a UE that supports/reports at least one of UE capabilities mentioned above. Alternatively, the first to fifth aspects may be employed in a UE configured from a network.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

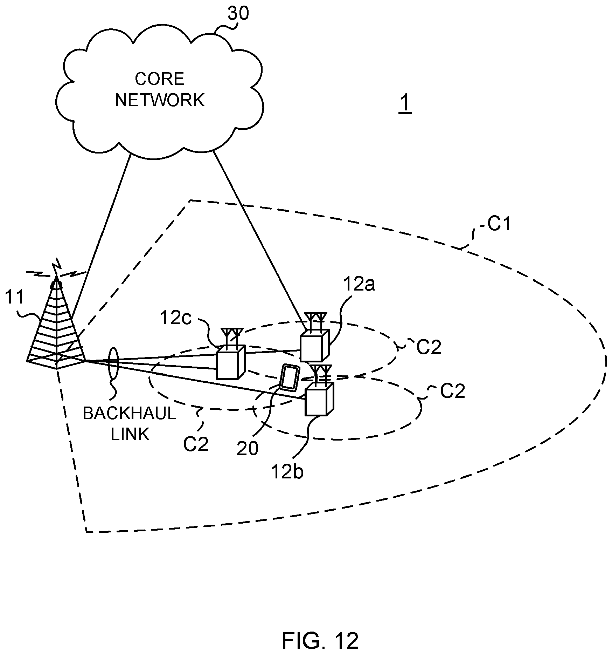

FIG. 12 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

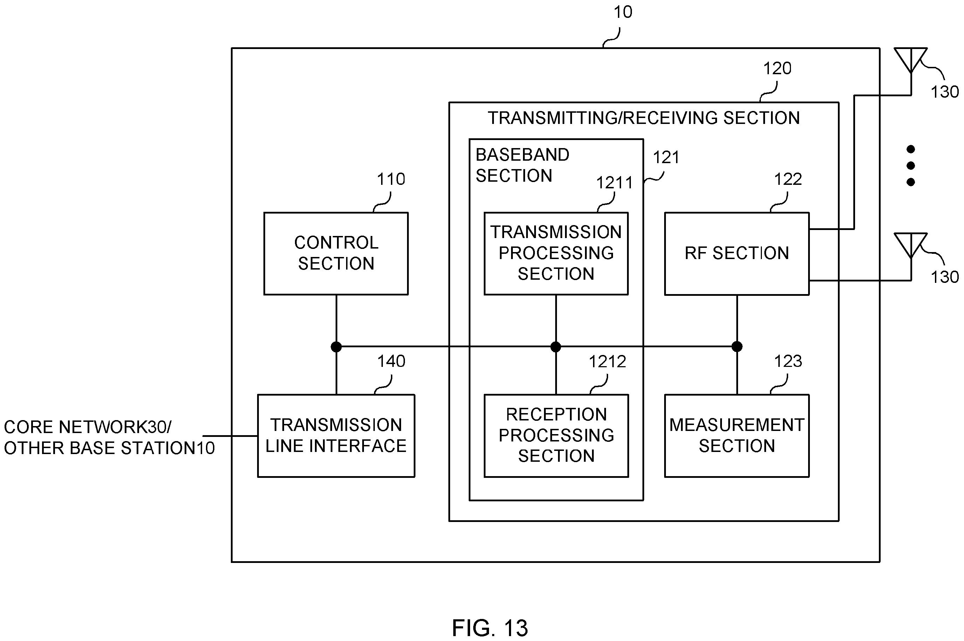

FIG. 13 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit at least one of configuration information about beam failure recovery and configuration information about a reference signal for beam failure detection, each piece of the configuration information being for a cell included in a cell group.

The control section 110 may control, depending on at least one of the configuration information about the beam failure recovery and the configuration information about the reference signal for the beam failure detection, the number of control channel resources corresponding to a scheduling request (SR) for beam failure recovery configured for the cell group or a specific cell in the cell group.

### (User Terminal)

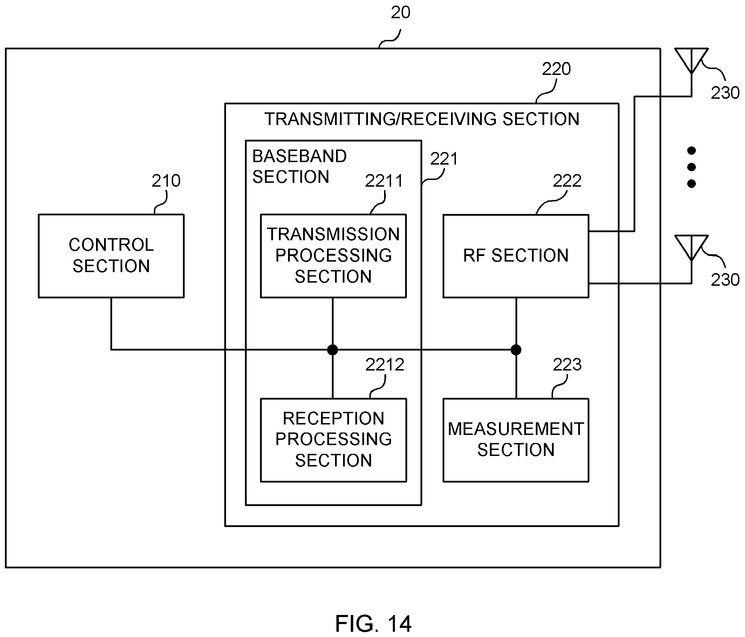

FIG. 14 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive at least one of configuration information about beam failure recovery and configuration information about a reference signal for beam failure detection, each piece of the configuration information being for a cell included in a cell group.

The control section 210 may judge, on the basis of at least one of the configuration information about the beam failure recovery and the configuration information about the reference signal for the beam failure detection, the number of control channel resources corresponding to a scheduling request (SR) for beam failure recovery configured for the cell group or a specific cell in the cell group.

When transmission/reception points differing between the specific cell included in the cell group and another cell are configured, and beam failure is detected in such another cell in units of a transmission/reception point, the control section 210 may control to transmit the scheduling request for the beam failure recovery by using a predetermined uplink control channel resource for the specific cell.

When an SR for beam failure recovery for a certain transmission/reception point of the specific cell is triggered, and beam failure in another transmission/reception point is detected or beam failure recovery for such another transmission/reception point is triggered before transmission of a MAC CE corresponding to the SR, the control section 210 may control to perform a beam failure recovery request by using a certain resource other than an uplink control channel resource corresponding to the certain transmission/reception point.

When per-cell beam failure recovery is configured for the specific cell, and a plurality of uplink control channel resources are configured for the SR for the beam failure recovery, the control section 210 may control to transmit, by using a predetermined uplink control channel resource, an SR triggered for beam failure recovery for another cell.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

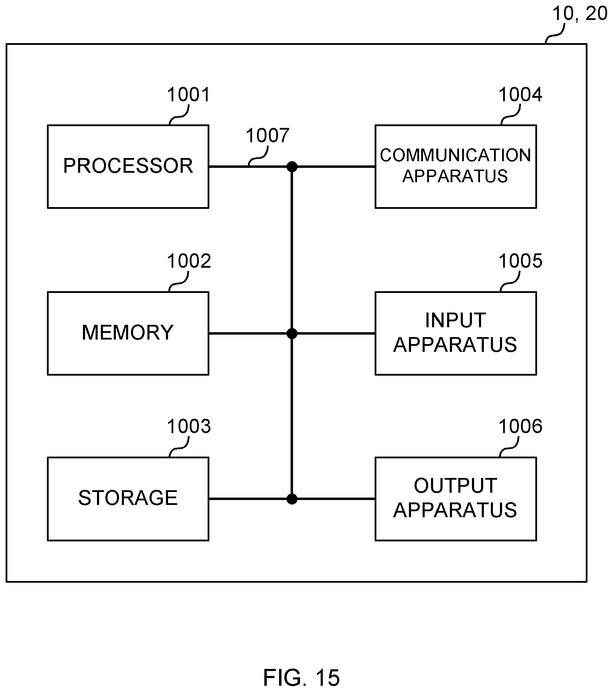

For example, a base station, a user terminal, and so on according to one embodiment of the present disclosure may function as a computer that executes the processes of the radio communication method of the present disclosure. FIG. 15 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported by using, for example, media access control control elements (MAC Control Elements (CEs)).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "reference signal (Reference Signal (RS) port group)," a "layer," "the number of layers," a "rank," a "resource," a "resource set," a "resource group," a "beam," a "beam width," a "beam angular degree," an "antenna," an "antenna element," a "panel," a "transmission/reception point," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink," "downlink," and the like may be interpreted as the words corresponding to the terminal-to-terminal communication (for example, "side"). For example, an uplink channel, a downlink channel, and the like may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced/changed/updated based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives at least one of configuration information about beam failure recovery and configuration information about a reference signal for beam failure detection, each piece of the configuration information being for a cell included in a cell group; and
a control section that judges, on the basis of at least one of the configuration information about the beam failure recovery and the configuration information about the reference signal for the beam failure detection, the number of control channel resources corresponding to a scheduling request (SR) for beam failure recovery configured for the cell group or a specific cell in the cell group.

2. The terminal according to claim 1, wherein
when transmission/reception points differing between the specific cell included in the cell group and another cell are configured, and beam failure is detected in the other cell in units of a transmission/reception point, the control section controls to transmit the scheduling request for the beam failure recovery by using a predetermined uplink control channel resource for the specific cell.

3. The terminal according to claim 1, wherein
when an SR for beam failure recovery for a certain transmission/reception point of the specific cell is triggered, and beam failure in another transmission/reception point is detected or beam failure recovery for the other transmission/reception point is triggered before transmission of a MAC CE corresponding to the SR, the control section controls to perform a beam failure recovery request by using a certain resource other than an uplink control channel resource corresponding to the certain transmission/reception point.

4. The terminal according to claim 1, wherein
when per-cell beam failure recovery is configured for the specific cell, and a plurality of uplink control channel resources are configured for the SR for the beam failure recovery, the control section controls to transmit, by using a predetermined uplink control channel resource, an SR triggered for beam failure recovery for another cell.

5. A radio communication method comprising:
receiving at least one of configuration information about beam failure recovery and configuration information about a reference signal for beam failure detection, each piece of the configuration information being for a cell included in a cell group; and
judging, on the basis of at least one of the configuration information about the beam failure recovery and the configuration information about the reference signal for the beam failure detection, the number of control channel resources corresponding to a scheduling request (SR) for beam failure recovery configured for the cell group or a specific cell in the cell group.

6. A base station comprising:
a transmitting section that transmits at least one of configuration information about beam failure recovery and configuration information about a reference signal for beam failure detection, each piece of the configuration information being for a cell included in a cell group; and
a control section that controls, depending on at least one of the configuration information about the beam failure recovery and the configuration information about the reference signal for the beam failure detection, the number of control channel resources corresponding to a scheduling request (SR) for beam failure recovery configured for the cell group or a specific cell in the cell group.
